# EUROPEAN PATENT APPLICATION

(11) **EP 4 838 691 A1**
(43) Date of publication of application: **11.11.2026**
(21) Application number: 25822248.8
(22) Date of filing: 11.06.2025
(51) Int. Cl.: H01M 50/645, H01M 50/152, H01M 50/169, H01M 50/159, H01M 10/04, H01M 50/249

(54) **BATTERY CELL, AND BATTERY PACK AND VEHICLE INCLUDING SAME**

(30) Priority: 11.06.2024 KR 20240075541; 10.06.2025 KR 20250075563
(71) Applicant: LG Energy Solution, Ltd., Seoul 07335 (KR)
(72) Inventor: PARK, Jeong-Ho, Daejeon 34122 (KR); MUN, Hong-Jae, Daejeon 34122 (KR); YOU, Byung-Uk, Daejeon 34122 (KR); LEE, Yong-Moon, Daejeon 34122 (KR); LEE, Ja-Sool, Daejeon 34122 (KR)
(74) Representative: Goddar, Heinz J.
(86) International application number: PCT/KR2025/007972
(87) International publication number: WO 2025/258994

(57) **Abstract**

A battery cell of the present disclosure may include an electrode assembly in which a first electrode, a second electrode, and a separator interposed therebetween are wound around a winding axis; a can configured to accommodate the electrode assembly through an open end formed on one side; a lid covering the open end and having an injection port at the center; and a sealing member configured to seal the injection port, wherein the sealing member may have a sealing portion pressed into the injection port and in close contact with an inner circumferential surface of the injection port; and a welded portion mutually welded to the inner circumferential surface of the injection port.

## Description

### TECHNICAL FIELD

The present disclosure relates to a battery cell, and a battery pack and a vehicle including the same.

This application is based on and claims priority from Korean Patent Application No. 10-2024-0075541, filed on June 11, 2024, with the Korean Intellectual Property Office, the disclosure of which is incorporated herein in its entirety by reference.

This application is based on and claims priority from Korean Patent Application No. 10-2025-0075563, filed on June 10, 2025, with the Korean Intellectual Property Office, the disclosure of which is incorporated herein in its entirety by reference.

### BACKGROUND ART

A cylindrical battery cell is a structure that accommodates a jelly-roll type electrode assembly inside a cylindrical metal can, and is more robust to impact or temperature than a pouch type battery. Accordingly, there is an increasing demand for using a metal can type cell as a battery cell applied to a vehicle battery pack.

The process of manufacturing a battery cell utilizing a cylindrical can includes deep drawing a metal sheet to mold a circular bottom portion and a circular tubular side wall portion connected thereto, accommodating an electrode assembly therein, and then covering the open end of the side wall portion with a lid to finish.

The method of covering the open end of the battery can with a lid and fixing the lid and the battery can may be applied by crimping or seam welding.

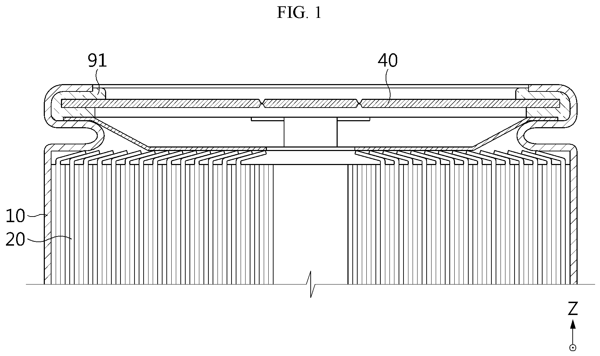

FIG. 1 is a view showing a method of fixing a lid and a battery can by a conventional crimping method.

Referring to FIG. 1, crimping is a method of fixing the lid 40 by physically pressing the edge of the lid 40 to the open end of the can 10 with a gasket 91 interposed therebetween. Since crimping is a physical fixing method that does not apply heat, it is allowable to work while the electrolyte is injected into the can. Therefore, the crimping method has the advantage of being able to omit a separate injection port structure and a structure for sealing the same. However, crimping is structurally more complex compared to welding, and thus there are limitations in securing the internal volume of the can capable of accommodating the electrode assembly 20.

In contrast, seam welding is a method of welding the circumference of the front end of the side wall portion of the battery can and the circumference of the edge of the lid together along the circumferential direction, and since the fixing structure is simple, the volume of the electrode assembly that can be accommodated inside the battery can may be further secured. Therefore, the seam welding method is more advantageous in securing electric capacity compared to the same volume of the battery can.

However, when the battery can is filled with electrolyte and then the open end of the battery can is covered with the lid and welded, there is a possibility that the electrolyte may be deteriorated or ignited due to the high temperature generated by welding.

For example, if the material of the can and the lid is SUS, the surface temperature may rise to 1400 degrees Celsius, which is the melting point of SUS. This high temperature heat may cause the ignition of electrolyte.

Accordingly, when the circumference of the open end of the battery can and the lid are to be fixed by seam welding, a method of preparing a battery can with an injection port provided at the bottom portion or a lid provided with the injection port, accommodating an electrode assembly inside the battery can, injecting an electrolyte through the injection port provided at the lid or the bottom portion of the battery can after seam welding of the battery can and the lid, and sealing the injection port to finish after completing the injection, may be applied.

Therefore, there may be a need for a sealing method that has no gas leakage due to vaporization of the electrolyte by welding heat and enhances the sealing force.

### DISCLOSURE

### Technical Problem

The present disclosure is devised to solve the above-described problems, and therefore the present disclosure is directed to providing a battery cell with an improved sealing structure of an injection port and a method for manufacturing the same.

The present disclosure is designed to solve the above-described problems, and therefore the present disclosure is directed to providing a sealing structure of the injection port and a sealing method thereof that may inject an electrolyte through the injection port, thereby enabling seam welding of the lid and the can before the electrolyte injection, and sealing the injection port so that a gas channel is not formed after injection.

Additionally, the present disclosure is directed to providing a sealing structure of the injection port and a sealing method thereof that may not cause welding defects or ignition at the welding part due to electrolyte gas even when welding is applied for sealing the injection port.

Additionally, the present disclosure is directed to providing a sealing structure of the injection port and a sealing method thereof that may minimize the number of parts and reduce assembly man-hours.

Additionally, the present disclosure is directed to providing a battery cell structure that may allow the electrolyte to be smoothly filled when injected into a can.

Additionally, the present disclosure is directed to providing a sealing structure of the injection port that enables sealing of the injection port without applying a strong force when sealing the injection port, a sealing method thereof, and a battery cell applying the same.

Additionally, the present disclosure is directed to providing a battery cell with high energy density by excluding a beading crimping structure from a battery cell, and a vehicle equipped with a battery pack applying the same.

The technical problems of the present disclosure are not limited to the above-described objects, and other objects and advantages of the present disclosure not mentioned herein may be understood by the following description, and will be more clearly understood by the embodiments of the present disclosure. Additionally, it will be easily understood that the objects and advantages of the present disclosure may be realized by the means and combinations thereof indicated in the claims.

### Technical Solution

A battery cell of the present disclosure for solving the above-described problems may include an electrode assembly in which a first electrode, a second electrode, and a separator interposed therebetween are wound around a winding axis; a can configured to accommodate the electrode assembly through an open end formed on one side; a lid covering the open end and having an injection port at the center; and a sealing member configured to seal the injection port, wherein the sealing member may have a sealing portion pressed into the injection port and in close contact with an inner circumferential surface of the injection port; and a welded portion mutually welded to the inner circumferential surface of the injection port.

The sealing portion and the welded portion may be spaced apart from each other in the winding axis direction.

The lid may include a plate portion provided with a hole; and a pipe portion that extends inward from an inner circumference of the plate portion defining the hole in the winding axis direction and forms the injection port.

The pipe portion may have a tapered section whose inner diameter decreases toward the inner side in the winding axis direction.

The maximum outer diameter of the sealing member may be larger than the minimum inner diameter of the tapered section of the pipe portion.

The maximum outer diameter of the sealing member may be larger than the minimum inner diameter of the tapered section by 0.05 mm or more and 0.40 mm or less.

The sealing portion of the sealing member may be positioned on the inner side in the winding axis direction relative to the center line of the sealing member.

When the sealing member is pressed into the injection port, the inner diameter of the pipe portion may be expanded radially outward in a predetermined section of the tapered section that contacts the sealing portion.

The welded portion may be disposed on the outer side in the winding axis direction relative to the sealing portion.

The sealing member may have a ball shape.

The can and the lid may be thermally bonded.

A method for manufacturing a battery cell of the present disclosure may include a step of covering the open end with the lid while accommodating the electrode assembly in the can; a step of bonding the edge of the lid to the can; a step of injecting an electrolyte into the can through the injection port of the lid bonded to the can; a step of pressing the sealing member into the injection port after injecting the electrolyte to allow the injection port and the sealing member to be in close contact with each other; and a step of welding the sealing member and the inner circumferential surface of the injection port.

The press-in load of the sealing member may be 1 ton or less.

The sealing force of the injection port and the sealing member may be in the range of 10⁻⁵ to 10⁻³ atm·cc/s based on He leak.

Additionally, the present disclosure provides a battery pack including a battery cell according to the present disclosure.

Additionally, the present disclosure provides a vehicle equipped with a battery pack according to the present disclosure.

### Advantageous Effects

According to the present disclosure, by pressing the sealing member into the injection port before welding, it is possible to secure a temporary sealing force enough to secure a sealing force against the pressure of the vaporized gas of the electrolyte due to the heat generated when welding the injection port and the sealing member. At this state, the sealing member and the inner circumferential surface of the injection port may be welded to secure a final sealing force higher than the temporary sealing force.

According to the present disclosure, since the temporary sealing force is lower than the final sealing force, the press-in force of the sealing member may be significantly reduced compared to the case where the sealing force is secured only by press-in, thereby minimizing permanent deformation of the lid or the can due to press-in force.

According to the present disclosure, since welding is performed after securing the temporary sealing force, the impact of electrolyte vaporized within the battery cell due to welding heat during the welding process on welding quality may be eliminated, thereby improving welding quality.

According to the present disclosure, one sealing member component may be used to provide a sealing portion for the injection port and also provide a welded portion with the inner circumferential surface of the injection port. Accordingly, the number of parts may be reduced and the assembly man-hours may be reduced.

Additionally, according to the present disclosure, since both the temporary sealing force and the final sealing force are provided by one sealing member component, the length of the pipe portion defining the injection port in the winding axis direction may be reduced, thereby preventing the pipe portion from interfering with the electrode assembly. Accordingly, the inner diameter of the injection port may be increased, and the injection efficiency may be improved.

Additionally, according to the present disclosure, by shortening the extension length of the pipe portion, it is possible to minimize the phenomenon in which the welding heat of the sealing member affects the electrode assembly or the electrolyte.

According to the present disclosure, since the sealing member and the inner circumferential surface of the injection port are in close contact with each other in the tapered section of the pipe portion defining the injection port, the press-in force required to form the sealing portion may be reduced, and the sealing portion and the welded portion may be easily formed to be spaced apart from each other.

According to the present disclosure, since the sealing portion is disposed to be spaced apart from the welded portion, the sealing portion may not be melted due to the welding heat during the welding process. That is, the welding heat may not cause the sealing portion to lose the sealing force thereof.

In addition to the above-described effects, the specific effects of the present disclosure will be described together while describing specific matters for carrying out the disclosure below.

### DESCRIPTION OF DRAWINGS

The accompanying drawings illustrate preferred embodiments of the present disclosure and together with the foregoing disclosure, serve to provide further understanding of the technical features of the present disclosure, and thus, the present disclosure is not construed as being limited to the drawing.
FIG. 1 is a view showing a method of fixing a lid and a battery can by a conventional crimping method.
FIG. 2 is a perspective view of a battery cell according to an embodiment of the present disclosure.
FIG. 3 is a perspective view showing a state before laminating a first electrode, a second electrode, and separators for manufacturing an electrode assembly to be accommodated in a battery can according to an embodiment of the present disclosure.
FIG. 4 is a perspective view of an electrode assembly manufactured by winding the laminate of FIG. 3 into a jelly-roll shape.
FIGS. 5 and 6 are perspective views showing a state in which a current collector plate is respectively bonded to both ends of an electrode assembly according to an embodiment of the present disclosure.
FIG. 7 is a cross-sectional view showing a process of accommodating an electrode assembly according to an embodiment of the present disclosure in a battery can.
FIG. 8 is a cross-sectional view showing a state in which a can accommodating an electrode assembly according to an embodiment of the present disclosure is covered with a lid and sealed.
FIG. 9 is a cross-sectional view showing a state in which the injection port of a lid is sealed by a sealing member according to an embodiment of the present disclosure.
FIG. 10 is a cross-sectional view showing a state before a sealing member is inserted into the injection port of a lid according to an embodiment of the present disclosure.
FIG. 11 is a cross-sectional view showing a state after a sealing member is inserted into the injection port of a lid according to an embodiment of the present disclosure.
FIG. 12 is a cross-sectional view showing a state in which a sealing member and the injection port of a lid are welded to each other according to an embodiment of the present disclosure.
FIG. 13 is a cross-sectional view of FIG. 12 after welding.
FIG. 14 is a cross-sectional view showing a state in which the injection port of a lid is sealed by a sealing member according to another embodiment of the present disclosure.
FIG. 15 is a cross-sectional view showing a state in which the injection port of a lid is sealed by a sealing member according to still another embodiment of the present disclosure.
FIG. 16 is a flow chart of a method for manufacturing a battery cell to which the injection port closure structure of the present disclosure is applied.
FIG. 17 is a view for describing a battery pack according to an embodiment of the present disclosure.
FIG. 18 is a view for describing a vehicle including the battery pack of FIG. 17.

### BEST MODE

Hereinafter, preferred embodiments of the present disclosure will be described in detail with reference to the accompanying drawings.

The present disclosure is not limited to the embodiments disclosed below, but may be modified in various ways and implemented in various forms. The present embodiments are provided merely to ensure complete disclosure of the present disclosure and to fully inform those having ordinary skill in the art of the scope of the disclosure. Therefore, the present disclosure is not limited to the embodiments disclosed below, but should be understood to include all modifications, equivalents, and substitutes within the technical ideas and scope of the present disclosure, as well as the substitution or addition of the configurations of one embodiment to those of another.

Additionally, the present disclosure includes various embodiments. For each embodiment, redundant descriptions of substantially identical or similar configurations will be omitted, and differences will be mainly described.

The accompanying drawings are intended solely to facilitate understanding of the embodiments disclosed herein, and the technical ideas disclosed herein are not limited by the accompanying drawings. All modifications, equivalents, and substitutes within the ideas and technical scope of the present disclosure should be understood as being included herein. In the drawings, components may be exaggerated in size or thickness for ease of understanding, but this should not be interpreted as limiting the scope of protection of the present disclosure.

The terms used herein are solely used to describe specific implementations or embodiments and are not intended to limit the present disclosure. And, singular expressions include plural expressions unless the context clearly indicates otherwise. Terms such as 'include' and 'comprise' in this specification are intended to specify the presence of a feature, number, step, operation, component, part, or combination thereof described herein. That is, terms such as 'include' and 'comprise' in this specification should be understood as not excluding the presence or addition of one or more other features, numbers, steps, operations, components, parts, or combinations thereof in advance.

Terms including ordinal numbers, such as first and second, may be used to describe various components, but such components are not limited by these terms. These terms are used solely to distinguish one component from another. Therefore, unless stated to the contrary, it is obvious that the first component may be the second component.

Throughout the specification, unless expressly stated to the contrary, each component may be singular or plural.

Singular expressions used herein include plural expressions unless the context clearly indicates otherwise. In the present application, terms such as 'comprise' or 'include' should not be construed as necessarily including all of the various components or steps described in the specification, but rather should be construed as not including some of the components or steps, or as further including additional components or steps.

When it is described that a component is "connected" or "coupled" to another component, the components may be directly connected to or coupled to each other, but it should be understood that there may be other components therebetween. On the other hand, when it is described that a component is "directly connected" or "directly coupled" to another component, it should be understood that there are no other components therebetween.

When it is described that any component is "above" or "below" another component, it should be understood that the component is disposed directly above another component, and furthermore, there may also be the other components therebetween.

Unless otherwise defined, all terms used herein, including technical or scientific terms, have the same meanings as commonly understood by those having ordinary skill in the art to which the present disclosure pertains. Terms defined in commonly used dictionaries should be interpreted to have meanings consistent with their meanings in the context of the relevant technology, and should not be interpreted in an ideal or overly formal sense unless explicitly defined herein.

Meanwhile, terms indicating directions such as upper, lower, left, right, front, and rear may be used in the present disclosure, but these terms are only for convenience of description, and it is obvious to those skilled in the art that the terms may vary depending on the position, arrangement, rotation of a reference object, or the position of an observer.

Throughout the specification, when referring to "A and/or B", it means A, B or A and B, unless expressly stated to the contrary, and when referring to "C to D", it means C or more and D or less, unless expressly stated to the contrary.

In describing the embodiments, the winding axis direction refers to a direction in which the axis forming the winding center of the jelly-roll type electrode assembly extends, the radial direction refers to a direction closer to (centripetal) or away from (centrifugal) the axis, and the circumferential (circumference) direction refers to a direction surrounding the axis.

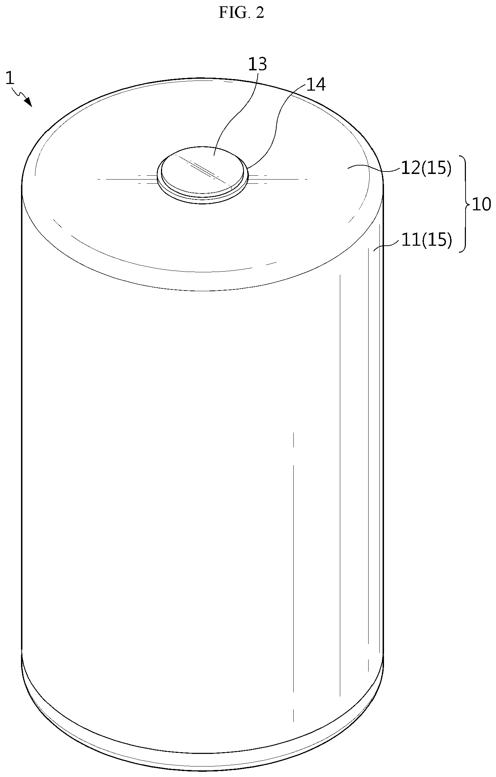

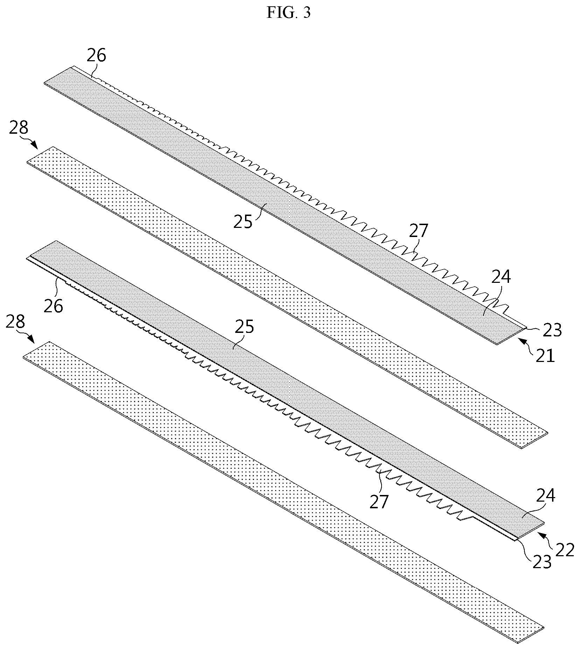

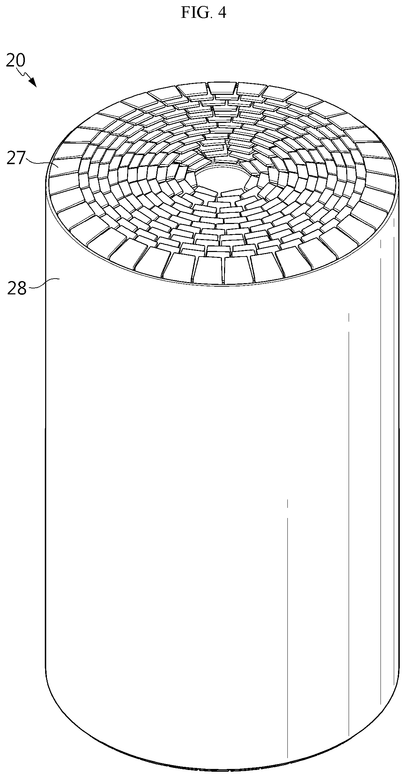

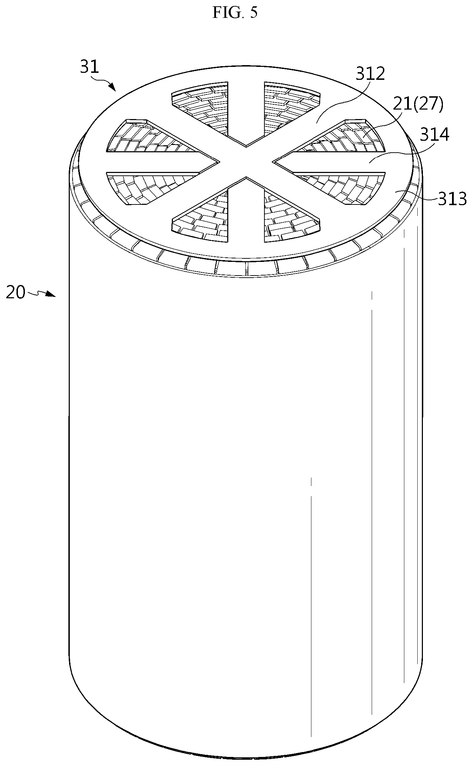

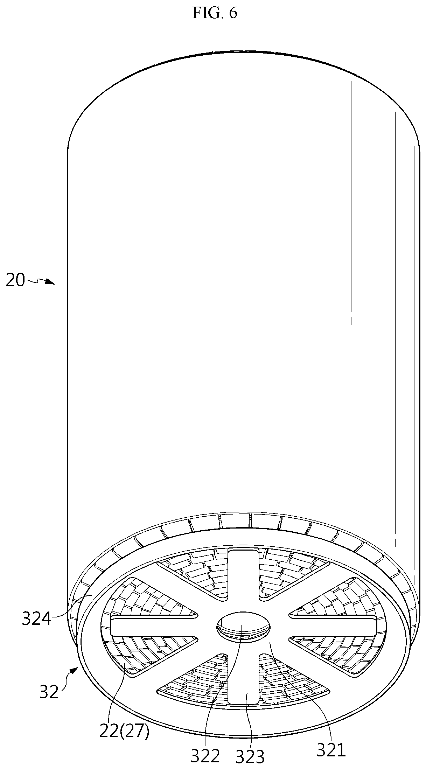

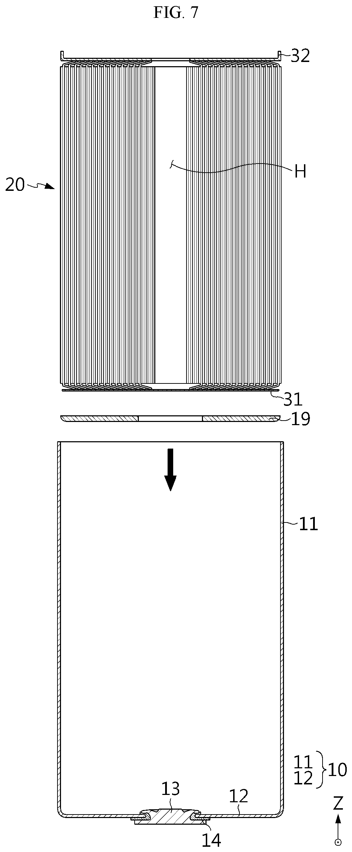

FIG. 2 is a perspective view of a battery cell according to an embodiment of the present disclosure. FIG. 3 is a perspective view showing a state before laminating a first electrode, a second electrode, and separators for manufacturing an electrode assembly to be accommodated in a battery can according to an embodiment of the present disclosure. FIG. 4 is a perspective view of an electrode assembly manufactured by winding the laminate of FIG. 3 into a jelly-roll shape. FIGS. 5 and 6 are perspective views showing a state in which a current collector plate is respectively bonded to both ends of an electrode assembly according to an embodiment of the present disclosure. FIG. 7 is a cross-sectional view showing a process of accommodating an electrode assembly in a battery can.

Hereinafter, an embodiment of a battery cell 1 to which the injection port sealing structure of the present disclosure is applied will be described in detail with reference to FIGS. 2 to 7.

The battery cell 1 may be manufactured by embedding a cylindrical electrode assembly 20 inside a cylindrical battery can 10.

The battery cell 1 of the embodiment may include an electrode assembly 20, current collector plates 31, 32 electrically connected to the electrode assembly 20, and a can 10 accommodating the electrode assembly 20 and the current collector plates 31, 32.

The can 10 may include a side wall portion 11 extending in the winding axis direction between a first end and a second end, and a bottom portion 12 connected to the first end of the side wall portion 11 and extending in the radial direction. The second end of the side wall portion 11 in the winding axis direction may be open.

The open end of the side wall portion 11 may be sealed by covering it with a lid 40 after accommodating the electrode assembly 20 in the can 10.

The bottom portion 12 may have a disk shape with a hole formed in the center, and the side wall portion 11 may have a circular tubular shape.

The bottom portion 12 and the side wall portion 11 may be manufactured by molding a metal sheet with nickel plating on the surface of steel by a deep drawing process, and trimming the front end of the side wall portion 11 with a punch while gripping it with a blank holder. Of course, the material of the can 10 is not limited thereto.

A first electrode terminal 13 may be fitted into the hole. The first electrode terminal 13 may be riveted and fixed to the bottom portion 12 with a gasket 14 interposed therebetween. The above gasket 14 may be interposed between the first electrode terminal 13 and the bottom portion 12 to seal the inside and outside of the can 10 to prevent leakage of the electrolyte, and to electrically insulate the first electrode terminal 13 from the bottom portion 12.

However, the connection method between the first electrode terminal 13 and the bottom portion 12 is not limited thereto. For example, as long as the structure is capable of providing sealing between the first electrode terminal 13 and the bottom portion 12 and electrically insulating the first electrode terminal 13 from the bottom portion 12, various other fixing methods, such as a bolt-nut coupling method, a glass seal method, or a chrome coating & PP-MAH thermal bonding method, may also be applied.

The first electrode terminal 13 may have a first polarity, and the can 10 may have a second polarity. That is, the bottom portion 12 of the can 10, the side wall portion 11 connected thereto, and the lid 40 connected to the side wall portion 11, which will be described later, may all have the second polarity.

Accordingly, the battery cell 1 may have both the first electrode terminal 13 and the second electrode terminal 15 disposed at the end in the winding axis, that is, the closed end, provided with the bottom portion 12. Then, the battery cell 1 may have both a busbar connected to the first electrode terminal 13 and a busbar connected to the second electrode terminal 15 positioned at the top of the battery cell 1.

In one example, the first electrode terminal 13 may be a positive electrode terminal, and the second electrode terminal 15 may be a negative electrode terminal. Of course, the opposite may also be true.

An electrode assembly 20 is accommodated within the can 10. The electrode assembly 20 may be manufactured in the cylindrical form of a jelly-roll by preparing a first electrode 21, a second electrode 22, and separators 28 that extend in the length direction with a predetermined width as shown in FIG. 3, and forming a laminate by sequentially laminating the first electrode 21, the separator 28, the second electrode 22, and the separator 28, and then winding the laminate around a mandrel axis as shown in FIG. 4.

The first electrode 21 may be a positive electrode, and the second electrode 22 may be a negative electrode. Of course, the opposite may also be true.

The first electrode 21 and the second electrode 22 are manufactured in the form of sheets. The electrode sheet is manufactured in the form of an active material layer 24 being applied to the surface of a metal foil 23. The electrode sheet has a coated portion 25 where an active material layer 24 is applied, and an uncoated portion 26 where an active material layer 24 is not applied. The positive electrode sheet has an uncoated portion 26 on one side in the width direction, and the negative electrode sheet has an uncoated portion 26 on the other side in the width direction.

The uncoated portion 26 is exposed or protrudes from the laminate in the width direction. The uncoated portion 26 itself functions as an electrode tab.

The uncoated portion 26 may be notched at predetermined intervals to form notching tabs 27 in the shape of flags.

In the embodiment, it is illustrated that the notching tabs 27 have an equilateral trapezoidal shape. However, their shapes may be various shapes such as a semicircle, a semi-ellipse, a triangle, a rectangle, a parallelogram, and the like.

Additionally, the embodiment illustrates that the notching tabs 27 arranged along the length direction have the same width. However, the width of the notching tabs may increase gradually or stepwise from the mandrel side to the outer circumferential side.

Additionally, the embodiment illustrates that the height of the notching tabs 27 increases stepwise from the mandrel side to the outer circumferential side. However, the height of these notching tabs may be implemented in a constant or gradually decreasing form.

Additionally, the embodiment illustrates a structure in which the notching tabs 27 are deleted in a predetermined section of the centripetal end of the uncoated portion 26 and a predetermined section of the centrifugal end thereof. However, it is obvious that the notching tabs may not be deleted at the centripetal end of the uncoated portion, and the notching tabs may not be deleted at the centrifugal end of the uncoated portion.

In the jelly-roll type electrode assembly 20, the notching tab 27 may be bent radially to be flattened as illustrated in FIG. 4. The notching tab 27 may be bent radially inward or outward. The embodiment illustrates a structure in which the notching tab 27 is bent radially inward.

The notching tab 27 may be bent one by one during the process of forming a jelly-roll type electrode assembly 20 by winding the laminate. Alternatively, the notching tab 27 may be bent all at once after the laminate is wound to form a jelly-roll type electrode assembly.

The notching tabs 27 of the first electrode 21 and the notching tabs 27 of the second electrode 22 that are bent radially and overlapped in this way may each provide a plane substantially perpendicular to the winding axis direction at both ends of the electrode assembly 20 in the winding axis direction.

A first current collector plate 31 and a second current collector plate 32 may each be bonded to the substantially flat surface provided by bending the notching tab 27 exposed at both ends of the electrode assembly 20 in the winding axis direction as illustrated in FIGS. 5 and 6.

The embodiment illustrates that the first current collector plate 31 is a positive electrode current collector plate and the second current collector plate 32 is a negative electrode current collector plate. The first current collector plate 31 may be made of aluminum and the second current collector plate 32 may be made of copper.

The current collector plates 31, 32 may be manufactured by punching, trimming, piercing, and bending a metal sheet.

Referring to FIG. 5, the first current collector plate 31 may include a first terminal connection portion 312 extending radially from the center, a ring portion 313 connecting the centrifugal edge of the first terminal connection portion 312 in a circumferential direction, and a first electrode connection portion 314 that extends centripetally from the ring portion 313 and is not connected to the first terminal connection portion 312. The center of the first terminal connection portion 312 may cover at least a part of the mandrel hollow portion of the electrode assembly 20.

The first electrode connection portion 314 is bonded to the notching tab 27 of the first electrode 21 of the electrode assembly 20 by laser welding or the like prior to placing the electrode assembly 20 in the can 10. The welding line of the laser may extend radially.

Referring to FIG. 6, the second current collector plate 32 may include an inner ring portion 321 that defines a hole 322 corresponding to the mandrel hollow portion of the electrode assembly 20 and is provided in a form surrounding the mandrel hollow portion, a second electrode connection portion 323 extending radially from the inner ring portion 321, and a second terminal connection portion 324 that is disposed on the centrifugal side than the second electrode connection portion 323 and is connected to the inner ring portion 321. The second terminal connection portion 324 may have the form of an outer ring surrounding the edge of the second current collector plate 32.

The second electrode connection portion 323 may be bonded to the notching tab 27 of the second electrode 22 of the electrode assembly 20 by laser welding or the like prior to placing the electrode assembly 20 in the can 10. The welding line of the laser may extend radially.

However, the shape and structure of the first current collector plate 31 and the second current collector plate 32 are not limited by the above embodiment, and may be designed and changed in various ways.

As illustrated in FIG. 7, the electrode assembly 20 may be accommodated in the can 10 in a state where the first current collector plate 31 is aligned toward the bottom portion 12 of the can 10. At this time, an insulator 19 may be interposed between the first current collector plate 31 and the bottom portion 12 of the can 10 to electrically insulate the first current collector plate 31 from the bottom portion 12.

In a state where the electrode assembly 20 is accommodated inside the can 10, the notching tab 27 of the second electrode 22 and the second current collector plate 32 may be disposed to face the open end of the side wall portion 11.

The first terminal connection portion 312 of the first current collector plate 31 may be bonded to the first electrode terminal 13 fixed to the can 10 by means of resistance welding, ultrasonic welding, laser welding, or the like. A welding device for welding the first current collector plate 31 and the first electrode terminal 13 may approach the back surface of the center of the first terminal connection portion 312 of the first current collector plate 31 through the open part of the can 10, the hole 322 of the second current collector plate 32, and the winding center hole H of the electrode assembly 20 to perform welding. Of course, in addition to this, the first current collector plate 31 and the first electrode terminal 13 may also be bonded by means of brazing, soldering, or the like. That is, the first current collector plate 31 and the first electrode terminal 13 may be coupled to each other in various ways as long as they may be electrically connected and fixed to each other. However, the present disclosure does not exclude a structure in which the positive electrode tab is directly electrically connected to the positive electrode terminal in a state where the positive electrode current collector plate is omitted.

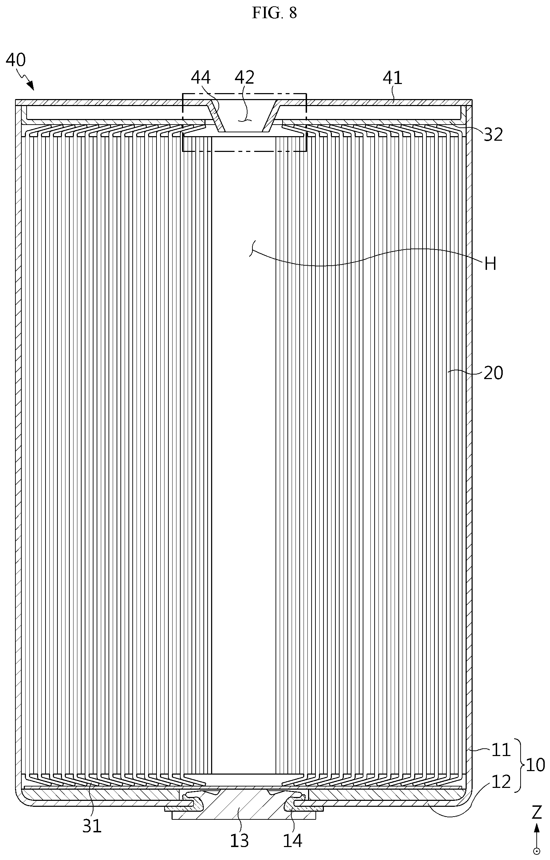

In a state where the electrode assembly 20 is accommodated in the can 10, the open end of the can 10 may be sealed by covering it with a lid 40 as illustrated in FIG. 8.

The can 10 and the lid 40 may be thermally bonded. The circumference of the front end of the side wall portion of the battery can 10 and the circumference of the edge of the lid 40 may be welded together along the circumferential direction. This may be defined as a seam welding method. Since the fixing structure is simple, the volume of the electrode assembly that can be accommodated inside the can may be further secured. Therefore, the seam welding method is more advantageous in securing electric capacity compared to the same volume of the can.

Specifically, when the circumference of the open end of the can 10 and the lid are to be fixed by seam welding, a method of preparing a can 10 with an injection port provided at the bottom portion or a lid 40 provided with the injection port, accommodating an electrode assembly 20 inside the can 10, injecting an electrolyte through the injection port provided at the lid 40 or the bottom portion of the can 10 after seam welding of the can 10 and the lid 40, and sealing the injection port with a plug or a sealing member 50 to finish after completing the injection, may be applied.

The second terminal connection portion 324 of the second current collector plate 32 and the second end of the side wall portion 11 may be bonded by a method such as welding. The can 10 and the edge of the lid 40 may be sealed by a method such as welding. In one example, after the second current collector plate 32 and the can 10 are bonded, the lid 40 and the can 10 may be bonded. In another example, after the second current collector plate 32 and the lid 40 are bonded, the lid 40 and the can 10 may be bonded. In another example, the second current collector plate 32, the can 10, and the lid 40 may be welded at one time.

The inner surface of the lid 40 may be bonded to and electrically connected to the tab of the second electrode of the electrode assembly 20 accommodated inside the can 10 of the battery cell 1, and the edge of the lid 40 may be bonded to and electrically connected to the edge of the open end side of the can 10.

After sealing the can 10 with the lid 40, the electrolyte may be injected into the can 10 through the injection port 42 provided in the lid 40.

The lid 40 may be made of, for example, low-carbon steel. The lid 40 may be made of, for example, nickel-plated steel (Ni plated steel), cold-rolled steel (SPCC or SPCE), or stainless steel (SUS). The lid 40 may be manufactured by, for example, molding a metal plate using a press.

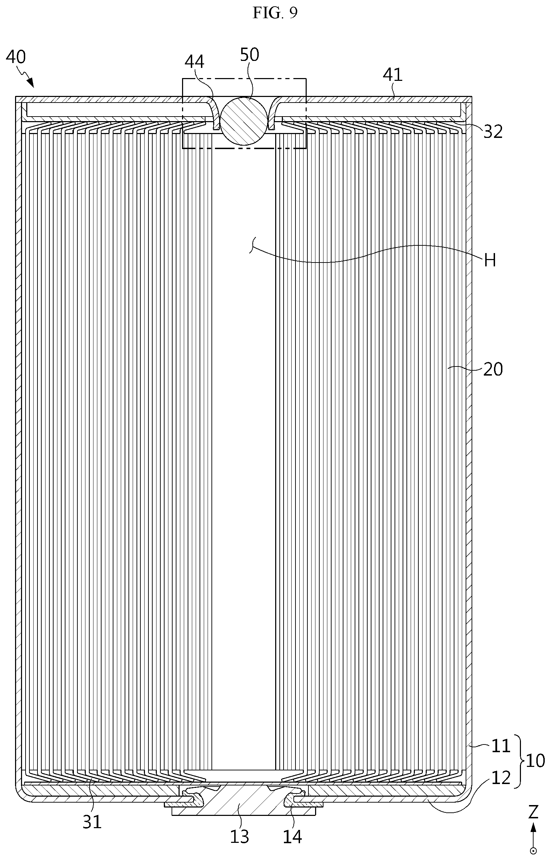

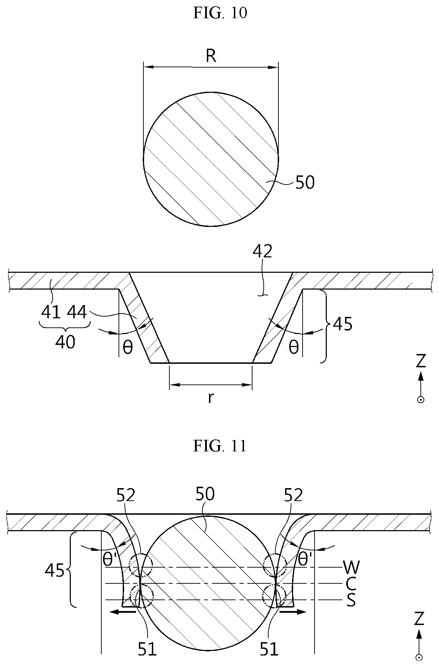

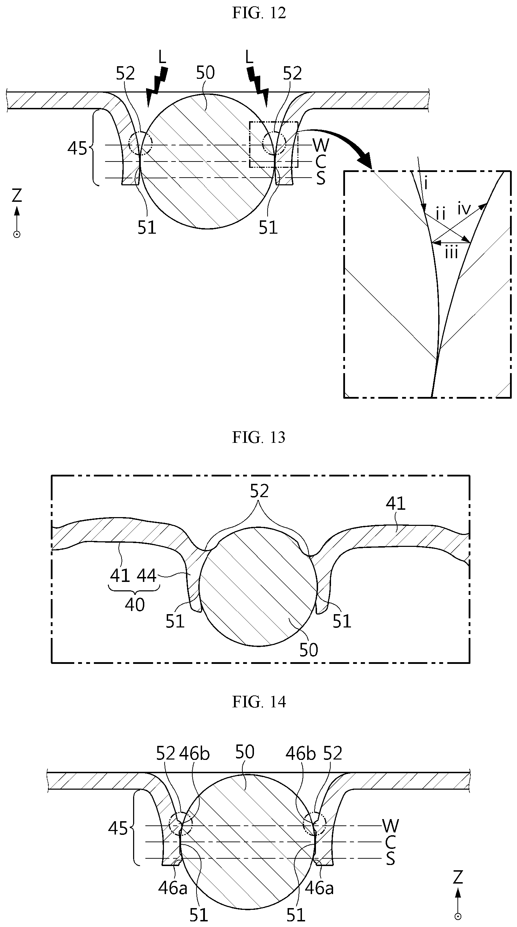

FIG. 8 is a cross-sectional view showing a state in which a can accommodating an electrode assembly according to an embodiment of the present disclosure is covered with a lid and sealed. FIG. 9 is a cross-sectional view showing a state in which the injection port of a lid is sealed by a sealing member according to an embodiment of the present disclosure. FIG. 10 is a cross-sectional view showing a state before a sealing member is inserted into the injection port of a lid according to an embodiment of the present disclosure. FIG. 11 is a cross-sectional view showing a state after a sealing member is inserted into the injection port of a lid according to an embodiment of the present disclosure. FIG. 12 is a cross-sectional view showing a state in which a sealing member and the injection port of a lid are welded to each other according to an embodiment of the present disclosure. FIG. 13 is a cross-sectional view of FIG. 12 after welding.

Referring to FIGS. 8 to 13, the injection port 42 may be provided in the center of the lid 40. The injection port 42 may, for example, serve as an electrolyte injection port.

The injection port 42 may be blocked by a sealing member 50 to be described later. For example, the sealing member 50 may be pressed onto the injection port 42. Since the injection port 42 is blocked by the sealing member 50, the battery cell 1 may be ensured to be sealed.

The center of the injection port 42 may coincide with the center of the winding center hole H of the electrode assembly 20. That is, the injection port 42 of the lid 40 may be positioned above the winding center hole H of the electrode assembly 20 in the winding axis direction.

Meanwhile, the injection port 42 may be configured to discharge gas generated in the pre charge process to be described later. That is, after the degassing process in which all gases generated in the pre charge process are discharged through the injection port 42, the sealing member 50 may be configured to be coupled onto the injection port 42. Accordingly, the swelling phenomenon of the battery cell 1 may be reduced.

The lid 40 may include a plate portion 41 provided with a hole and a pipe portion 44 extending inward in the winding axis direction from the inner circumference of the plate portion 41 defining the hole.

For example, the thickness of the plate portion 41 may be approximately 0.3 mm or more and 1.0 mm or less. The injection port 42 may be manufactured by drawing a micro hole part formed in the center of the disc-shaped plate portion 41 of the lid 40. For example, a funnel-shaped pipe portion 44 may be formed by punching a micro hole in a plate portion 41 and then pushing it into a mold in the shape of a rod (determining the inner diameter of the injection port), thereby forming the injection port 42. That is, the injection port 42 may be formed by plastic processing of the lid 40.

The pipe portion 44 may form the injection port 42. The injection port 42 may be defined by the pipe portion 44 extending in the winding axis direction from the center of the lid 40. That is, the inner circumferential surface of the pipe portion 44 may be defined as the injection port 42. Hereinafter, the inner circumferential surface of the injection port 42 may be understood as referring to the inner circumferential surface of the pipe portion 44.

The injection port 42 may have a through section extending in the winding axis direction, and may have a through cross-section defined by a part where a virtual plane extending in a radial direction perpendicular to the winding axis direction intersects the inner circumferential surface of the injection port 42.

For example, the through cross-section of the injection port 42 defined by the inner circumferential surface of the pipe portion 44 may be circular.

Referring to FIG. 10, the pipe portion 44 may have a tapered section 45 whose inner diameter decreases toward the inner side in the winding axis direction. The pipe portion 44 may have a tapered section 45 whose through area gradually decreases toward the inner side in the winding axis direction. That is, the pipe portion 44 defining the injection port 42 may have a circular tapered pipe shape as illustrated. The tapered section 45 may be configured as a straight inclined surface inclined at a predetermined taper angle (θ) with respect to the winding axis direction. That is, the tapered section 45 may have, for example, a conical shape. At this time, for example, the taper angle (θ) may be an angle inclined at approximately 10 to 20 degrees with respect to the winding axis direction.

After the injection of the electrolyte is completed, the injection port 42 may be sealed with a sealing member 50. The sealing member 50 may be configured to seal the injection port 42. The sealing member 50 may be configured to be inserted into the injection port 42. The sealing member 50 may pass through the injection port 42. By inserting the sealing member 50 into the injection port 42 of the lid 40, the sealing property of the battery cell 1 may be ensured. The sealing member 50 may pass through the injection port 42 formed in the lid 40 to seal the outside and inside of the can 10 and prevent leakage of the electrolyte.

According to this structure, the beading and crimping processes may be omitted, thereby simplifying the manufacturing process. Furthermore, it is possible to prevent a phenomenon in which the dead space within the battery increases in the winding axis direction of the electrode assembly 100 due to the beading and crimping structure and thus the energy density is lowered. That is, according to the structure of the present disclosure, the energy density of the battery cell 1 may be improved.

The sealing member 50 may be a spherical metal ball. The sealing member 50 may be made of, for example, SUS material. When the lid 40 has a second polarity, aluminum cannot be used as the sealing member 50. When the sealing member 50 is made of SUS material, corrosion by the electrolyte may be prevented.

Referring to FIG. 10, the maximum outer diameter (R) of the sealing member 50 may be larger than the minimum inner diameter (r) of the tapered section 45 of the pipe portion 44. For example, the maximum outer diameter (R) of the sealing member 50 may be larger than the minimum inner diameter (r) of the tapered section 45 by about 0.05 mm or more and 0.40 mm or less. For example, the maximum outer diameter (R) of the sealing member 50 may be larger than the minimum inner diameter (r) of the tapered section 45 by about 0.05 mm or more and 0.20 mm or less. For example, the maximum outer diameter (R) of the sealing member 50 may be larger than the minimum inner diameter (r) of the tapered section 45 by about 0.05 mm or more and 0.10 mm or less. For example, the overlap dimension of the sealing member 50 and the pipe portion 44 before press-in may be about 0.025 mm or more and 0.20 mm or less in the radial direction.

That is, the sealing member 50 having a diameter larger than the inner diameter of the pipe portion 44 is physically pressed into to seal it. The sealing member 50 may be pressed into the injection port 42. The sealing member 50 may be inserted into the injection port 42 by mechanical press-in. At this time, for example, the press-in load of the sealing member 50 may be about 1 ton or less. For example, the press-in condition of the sealing member 50 may be about 1 ton or less.

When increasing the press-in strength to ensure high sealing characteristics during press-in of the sealing member 50, there is a risk of a short circuit occurring if the lid 40 sags downward and causes physical damage to the electrode assembly 20 in severe cases. In the present disclosure, the overlap dimension of the sealing member 50 and the pipe portion 44 and the press-in load may be set to minimize the downward sagging of the lid 40.

In the process of pressing the sealing member 50 into the injection port 42, at least a part of the tapered section 45 may be deformed by an external load. Specifically, when the sealing member 50 is pressed into the injection port 42, the inner diameter of the pipe portion 44 may be expanded radially outward in a predetermined section that contacts the tapered section 45.

For example, referring to FIG. 10, the taper section 45 before press-in may be configured as a straight inclined surface inclined at a predetermined taper angle (θ) with respect to the winding axis direction. For example, the taper angle (θ) may be an angle inclined at about 10 to 20 degrees with respect to the winding axis direction.

When the sealing member 50 is pressed in, the tapered section 45 may receive a force radially outward by the sealing member 50. The sealing member 50 may induce a press-in load that acts radially outward on the inner circumferential surface of the tapered section 45. Accordingly, the end of the tapered section 45 may be expanded or bent radially outward. As a result, the taper angle (θ') after press-in may become smaller than the taper angle (θ) before press-in. For example, the taper angle (θ') after press-in may be an angle inclined by about 1 to 10 degrees with respect to the winding axis direction. Additionally, since the tapered section 45 is bent outward in the radial direction and configured as a curved inclined surface, the taper angle (θ') after press-in may not be constant depending on the height.

According to an embodiment, the rate at which the radius defining the through cross-section of the injection port 42 decreases toward the inner side in the winding axis direction may decrease. That is, the radius defining the through cross-section of the tapered section 45 gradually decreases toward the inner side in the winding axis direction, and the rate of decrease may be reduced. However, the shape and structure of the tapered section 45 are not limited by the above embodiment and may be designed and changed in various ways. For example, according to another embodiment, the rate at which the cross-sectional radius of the tapered section 45 defining the through cross-section of the injection port 42 decreases toward the inner side in the winding axis direction may be constant.

According to the above embodiment of the present disclosure, a temporary sealing force may be secured by pressing the sealing member 50 into the injection port 42 before the welding process of the injection port 42 and the sealing member 50. Here, the 'temporary sealing force' may refer to a sealing force at a level that may secure sufficient airtightness to prevent the vaporized gas of the electrolyte due to the heat generated during the process of welding the injection port 42 and the sealing member 50 from leaking out through the weld interface between the injection port 42 and the sealing member 50. That is, this temporary sealing force may mean that mechanical adhesion enough to resist the corresponding pressure may be secured under the condition that the electrolyte is converted to vapor and the internal pressure rises.

However, the final sealing force may not be secured by simply pressing the sealing member 50. That is, it may be difficult to completely secure the final sealing performance by such press-in alone. For example, this temporary sealing force secured by pressing the sealing member 50 may be in the range of about 10⁻⁵ to 10⁻³ atm·cc/s based on He leak. Here, the He leak test may refer to a test that quantitatively evaluates whether there is a micro leakage of the target component by using helium gas (He) as a tracer gas for leak detection. However, since this temporary sealing force is sufficient to suppress vapor emission, it is possible to prevent welding defects and the risk of electrolyte ignition during subsequent welding.

Additionally, according to the above embodiment of the present disclosure, since the temporary sealing force is lower than the final sealing force, the press-in load of the sealing member 50 may be reduced compared to the case where the sealing force is secured only by press-in. Accordingly, local plastic deformation or structural damage that may occur in the lid 40 or the can 10 due to excessive pressing force may be effectively prevented.

The sealing member 50 may have a sealing portion 51 in close contact with the inner circumferential surface of the injection port 42 and a welded portion 52 mutually welded to the inner circumferential surface of the injection port 42.

At this time, an area where the sealing member 50 is pressed into the injection port 42 and in close contact with the inner circumferential surface of the injection port 42 may be defined as the sealing portion 51. The sealing portion 51 is a part that directly contacts the inner circumferential surface of the injection port 42, and may refer to a contact area formed in a ring shape along the outer circumferential surface of the sealing member 50. The sealing portion 51 may refer to an area where the outer circumferential surface of the sealing member 50 pressed into the pipe portion 44 is radially in close contact with the inner circumferential surface of the pipe portion 44 in the tapered section 45. That is, the sealing portion 51 may be a weld surface where the inner circumferential surface of the injection port 42 and the outer circumferential surface of the sealing member 50 are radially in direct contact with each other.

Since the pipe portion 44 has a tapered shape, the sealing portion 51 may be disposed on the inner side in the winding axis direction relative to the center line C of the sealing member 50. Referring to FIG. 11, a horizontal line connecting the sealing portions 51 may be defined as a sealing line S. That is, the sealing line S may be positioned on the inner side in the winding axis direction relative to the center line C. This may be due to the geometrical characteristic that the inner diameter of the pipe portion 44 gradually decreases toward the inner side in the winding axis direction. As the slope of the tapered section 45 with respect to the winding axis direction, that is the taper angle (θ), increases, the sealing portion 51 may move deeper toward the inner side in the winding axis direction relative to the center line C of the sealing member 50. That is, the position of the sealing portion 51 may be set according to the displacement of the sealing member 50 induced by the tapered section 45.

Referring to FIGS. 11 and 12, after the sealing member 50 is pressed into the injection port 42, the sealing member 50 and the lid 40 may be welded. For example, the sealing member 50 and the lid 40 may be laser welded. Laser welding may be defined as a process of melting and bonding metals using a laser beam having a high energy density. Referring to FIG. 12, the sealing member 50 and the inner circumferential surface of the pipe portion 44 may be welded by irradiating the laser L. Then, the welded portion 52 may be formed as illustrated in FIG. 13.

The welded portion 52 may be spaced apart from the sealing portion 51 in the winding axis direction. The welded portion 52 may be disposed on the outer side in the winding axis direction relative to the sealing portion 51. Since the sealing portion 51 is spaced apart from the welded portion 52, it is possible to obtain more excellent sealing characteristics in terms of airtightness required in the battery cell 1 in a way that avoids welding defects and the risk of electrolyte ignition.

The welded portion 52 may be disposed on the outer side in the winding axis direction relative to the sealing portion 51 of the sealing member 50. Referring to FIG. 11, a horizontal line connecting the welded portions 52 may be defined as a welding line W. That is, the welding line W may be positioned on the outer side in the winding axis direction relative to the sealing line S.

The welded portion 52 may be disposed on the outer side in the winding axis direction relative to the center line C of the sealing member 50. That is, the welding line W may be positioned on the outer side in the winding axis direction relative to the center line C of the sealing member 50.

This may be due to geometrical constraints that the laser cannot reach the sealing portion 51 because the laser is irradiated from the upper side of the winding axis. According to the above embodiment of the present disclosure, since the sealing portion 51 is spaced apart from the welded portion 52, the sealing portion 51 may not be melted due to the welding heat during the welding process. That is, the welding heat may not cause the sealing portion 51 to lose the temporary sealing force thereof.

Referring to FIG. 11, the sealing member 50 and the inner circumferential surface of the injection port 42 may be spaced apart in the radial direction in the welded portion 52 before welding. That is, the sealing member 50 and the inner circumferential surface of the injection port 42 may not be bonded in the welded portion 52 before welding, unlike the sealing portion 51. During laser L welding, the sealing member 50 and the inner circumferential surface of the injection port 42 may be thermally bonded while melting the sealing member 50 and/or the inner circumferential surface of the injection port 42. Therefore, referring to FIG. 13, the sealing member 50 and the inner circumferential surface of the injection port 42 may be integrally formed after melting.

Referring to FIG. 12, the tapered section 45 of the pipe portion 44 and the upper edge of the sealing member 50 are welded, and the radial gap between the sealing member 50 and the tapered section 45 may become narrower toward the inner side in the winding axis direction. Therefore, when the laser beam is irradiated during welding, multiple reflections may occur in the order of sealing members i, ii, iii, and iv between the outer circumferential surface of the sealing member 50 and the inner circumferential surface of the pipe portion 44. At this time, as the reflection path becomes longer, the laser cannot penetrate into a deep area in the winding axis direction and is absorbed and extinguished near the irradiation point, and its energy may be mainly concentrated and transmitted near the welded portion 52. Additionally, since the sealing portion 51 is disposed slightly on the inner side in the winding axis direction relative to the center line C of the sealing member 50, the possibility of the laser reaching the sealing portion 51 may be further reduced. According to the above embodiment of the present disclosure, the welding heat source is concentrated on the outer upper end part of the sealing member 50, so that the effect of the heat may be concentrated on the welded portion 52. Additionally, the sealing portion 51 may maintain the sealing characteristics without weakening the sealing force by the welding heat.

According to the above embodiment of the present disclosure, by pressing the sealing member 50 into the injection port 42 before thermal bonding, it is possible to first secure a temporary sealing force enough to secure a sealing force against the pressure of the vaporized gas of the electrolyte due to the welding heat generated when thermally bonding the injection port 42 and the sealing member 50. After that, the sealing member 50 and the inner circumferential surface of the injection port 42 may be thermally bonded to secure a final sealing force higher than the temporary sealing force. Therefore, the final sealing force may be greater than the temporary sealing force. For example, the final sealing force that can be secured by welding may be about 10⁻⁷ atm·cc/s or less based on He leak. That is, high airtightness may be secured.

According to the above embodiment of the present disclosure, since thermal bonding is performed after securing the temporary sealing force, it is possible to prevent the phenomenon such as the formation of gas channels or the occurrence of cracks during the thermal bonding process, thereby preventing defects of the welded portion 52.

Additionally, according to the above embodiment of the present disclosure, since welding is performed after securing the temporary sealing force, it is possible to prevent the phenomenon of electrolyte vapor leaking to the outside and being ignited during the welding process.

Additionally, according to the above embodiment of the present disclosure, one sealing member 50 component may be used to form a sealing portion 51 for the injection port 42 and also form a welded portion 52 with the inner circumferential surface of the injection port 42. Accordingly, the number of parts may be reduced and the assembly man-hours may be reduced.

Additionally, according to the above embodiment of the present disclosure, since both temporary sealing force and final sealing force are provided by one sealing member 50 component, the length of the pipe portion 44 defining the injection port 42 in the winding axis direction may be reduced, thereby preventing the pipe portion 44 from interfering with the electrode assembly 20. Accordingly, the inner diameter of the injection port 42 may be increased, and the injection efficiency may be improved. In addition, it is possible to minimize the phenomenon in which the welding heat of the sealing member 50 affects the electrode assembly 20 or the electrolyte.

FIG. 14 is a cross-sectional view showing a state in which the injection port of a lid is sealed by a sealing member according to another embodiment of the present disclosure.

According to an embodiment, the pipe portion 44 may further have a protrusion 46 protruding inward. The protrusion 46 may be formed to protrude inward from the inner surface of the pipe portion 44.

The protrusion 46 may be provided in plurality. The plurality of protrusions 46 may be spaced apart along the winding axis direction and formed at a height set along the inner circumferential surface of the pipe portion 44. This configuration may increase the frictional force with the sealing member 50 to improve sealing performance.

For example, the protrusion 46 may have a lower protrusion 46a positioned at the lower side of the pipe portion 44 and an upper protrusion 46b positioned at the upper side of the pipe portion 44. The lower protrusion 46a and the upper protrusion 46b may be spaced apart in the winding axis direction. The lower protrusion 46a and the upper protrusion 46b may each be provided in plurality, and may be positioned at a height designated along the inner surface of the pipe portion 44.

At this time, the sealing member 50 may be pressed into the pipe portion 44 and positioned between the lower protrusion 46a and the upper protrusion 46b. The sealing member 50 may be seated between the lower protrusion 46a and the upper protrusion 46b. That is, the protrusion 46 may serve to fix the position of the sealing member 50.

Accordingly, the sealing member 50 may be fixed at a preset position without being affected by the press-in strength or positional deviation, and it may be possible to structurally prepare a seating portion of the sealing member in advance.

Additionally, the protrusion 46 may contribute to improving the overall sealing force by assisting in fixing the position of the sealing member 50 and simultaneously increasing the contact area with the pipe portion 44 to increase the frictional force.

In addition, the upper protrusion 46b may be utilized as a welding melting portion when welding the sealing member 50 and the pipe portion 44. The upper protrusion 46b may be located at the welded portion 52 or a portion adjacent thereto. Therefore, the upper protrusion 46b may be melted together when laser welding the sealing member 50 and the pipe portion 44.

According to the above embodiment of the present disclosure, the upper protrusion 46b may form a starting point for laser welding. Accordingly, it may be possible to structurally prepare the melting position in advance.

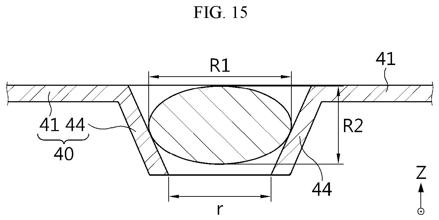

FIG. 15 is a cross-sectional view showing a state in which the injection port of a lid is sealed by a sealing member according to still another embodiment of the present disclosure.

According to an embodiment, one end surface of the sealing member 50 may be elliptical. The horizontal outer diameter R1 of the sealing member 50 may be formed longer than the vertical outer diameter R2. In other words, the sealing member 50 may have a relatively expanded shape in the horizontal direction and a relatively thin shape in the vertical direction.

According to the above embodiment of the present disclosure, by setting the cross-sectional shape of the sealing member 50 to an ellipse, the horizontal width of the injection port 42 may be increased. Accordingly, the inflow path when injecting the electrolyte is further secured, which may effectively prevent the phenomenon of contamination by the electrolyte contacting or leaking into the pipe portion 44 or surrounding components during the injection operation. As a result, it is possible to minimize the waste of electrolyte and improve the stability of the manufacturing process.

Additionally, according to the above embodiment of the present disclosure, since the elliptical shape of the sealing member 50 may minimize the vertical height of the injection port 42, the height of the pipe portion 44 may be reduced. When the height of the pipe portion 44 is reduced, more space may be secured within the can 10 accommodating the same, and thus the possibility of interference between the electrode assembly 20 and the pipe portion 44 may be reduced.

Additionally, by minimizing the space occupied by the pipe portion 44 and maximizing the accommodation efficiency of the electrode assembly 20, a larger effective electrode area may be secured within the same cell structure. Therefore, the overall energy density may be improved.

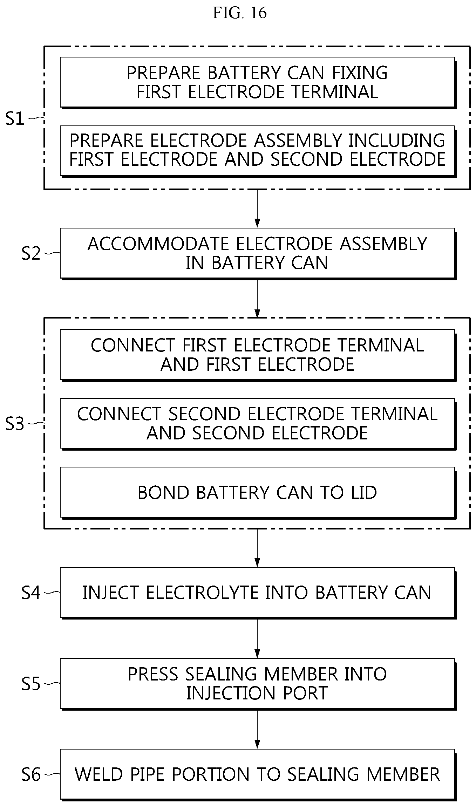

FIG. 16 is a flow chart of a method for manufacturing a battery cell to which the injection port closure structure of the present disclosure is applied.

Hereinafter, a method for manufacturing a battery cell 1 according to an embodiment of the present disclosure will be described with reference to FIG. 16.

First, a can 10 in which a first electrode terminal 13 is fixed in an insulating seal to a bottom portion 12, and an electrode assembly 20 including a first current collector plate 31 and a second current collector plate 32 welded to the first electrode and the second electrode at both ends, respectively, may be prepared (S1).

Subsequently, a step of covering the open end with the lid 40 while the electrode assembly 20 is accommodated in the can 10 (S2) may be included.

The electrode assembly 20 may be accommodated in the can 10 in a state where the first current collector plate 31 is aligned toward the bottom portion 12 of the can 10. At this time, an insulator 19 may be interposed between the first current collector plate 31 and the bottom portion 12 of the can 10 to electrically insulate the first current collector plate 31 from the bottom portion 12.

A step of thermally bonding the edge of the lid to the can (S3) may be included.

The first current collector plate 31 may be thermally bonded to the first electrode terminal 13. Additionally, the open end of the can 10 is sealed by covering it with a lid 40, and in order to allow the second current collector plate 32 to be electrically connected to the can 10 and the lid 40, which are the second electrode terminals 15, the second current collector plate 32 may be bonded to the can 10 and/or the lid 40, and the lid 40 and the can 10 may be thermally bonded.

The first current collector plate 31 may be bonded to the first electrode terminal 13 fixed to the can 10 by means of resistance welding, ultrasonic welding, laser welding, or the like. A welding device for welding the first current collector plate 31 and the first electrode terminal 13 may approach the back surface of the center of the first terminal connection portion 312 of the first current collector plate 31 through the open part of the can 10, the hole 322 of the second current collector plate 32, and the winding center hole H of the electrode assembly 20 to perform welding. Of course, in addition to this, the first current collector plate 31 and the first electrode terminal 13 may also be bonded by means of brazing, soldering, or the like. That is, the first current collector plate 31 and the first electrode terminal 13 may be coupled to each other in various ways as long as they may be electrically connected and fixed to each other.

In a state where the electrode assembly 20 is accommodated in the can 10, the open end of the can 10 may be sealed by covering it with a lid 40.

The second current collector plate 32 and the second end of the side wall portion 11 may be bonded by a method such as welding. The can 10 and the edge of the lid 40 may be sealed by a method such as welding. In one example, after the second current collector plate 32 and the can 10 are bonded, the lid 40 and the can 10 may be bonded. In another example, after the second current collector plate 32 and the lid 40 are bonded, the lid 40 and the can 10 may be bonded. In another example, the second current collector plate 32, the can 10, and the lid 40 may be welded at one time.

The inner surface of the lid 40 may be bonded to and electrically connected to the tab of the second electrode of the electrode assembly 20 accommodated inside the can 10 of the battery cell 1, and the edge of the lid 40 may be bonded to and electrically connected to the edge of the open end side of the can 10.

Next, a step of injecting an electrolyte into the battery can 10 through the injection port 42 of the lid 40 (S4) may be included.

Next, after injecting the electrolyte, a step of pressing the sealing member into the injection port to allow the injection port and the sealing member to be in close contact with each other (S5) may be included.

By applying the above-described injection port sealing structure, the injection port 42 of the lid 40 may be sealed with a sealing member 50. The sealing member 50 may be pressed into the injection port 42. The sealing member 50 may be inserted into the injection port 42 by mechanical press-in. At this time, for example, the press-in load of the sealing member 50 may be about 1 ton or less. For example, the press-in condition of the sealing member 50 may be about 1 ton or less.

When increasing the press-in strength to secure high sealing characteristics during press-in of the sealing member 50, there is a risk of a short circuit occurring if the lid 40 sags downward and causes physical damage to the electrode assembly 20 in severe cases. In the present disclosure, the overlap dimension of the sealing member 50 and the pipe portion 44 and the press-in load may be set to minimize the downward sagging of the lid 40.

In the process of pressing the sealing member 50 into the injection port 42, at least a part of the tapered section 45 may be deformed by an external load. Specifically, when the sealing member 50 is pressed into the injection port 42, the inner diameter of the pipe portion 44 may be expanded radially outward in a predetermined section that contacts the tapered section 45.

According to the above embodiment of the present disclosure, a temporary sealing force may be secured by pressing the sealing member 50 into the injection port 42 before the welding process of the injection port 42 and the sealing member 50. Here, the 'temporary sealing force' may refer to a sealing force at a level that may secure sufficient airtightness to prevent the vaporized gas of the electrolyte due to the heat generated during the process of welding the injection port 42 and the sealing member 50 from leaking out through the weld interface between the injection port 42 and the sealing member 50. That is, this temporary sealing force may mean that mechanical adhesion enough to resist the corresponding pressure may be secured under the condition that the electrolyte is converted to vapor and the internal pressure rises.

However, the final sealing force may not be secured by simply pressing the sealing member 50. That is, it may be difficult to completely secure the final sealing performance by such press-in alone. For example, this temporary sealing force secured by pressing the sealing member 50 may be in the range of about 10⁻⁵ to 10⁻³ atm·cc/s based on He leak. Here, the He leak test may refer to a test that quantitatively evaluates whether there is a micro leakage of the target component by using helium gas (He) as a tracer gas for leak detection. However, since this temporary sealing force is sufficient to suppress vapor emission, it is possible to prevent welding defects and the risk of electrolyte ignition during subsequent welding.

Finally, a step of welding the sealing member 50 and the inner circumferential surface of the injection port 42 (S6) may be included.

The sealing process may first secure a temporary sealing force by pressing the sealing member 50 into the injection port 42, and then secure a final sealing force by welding and sealing the upper edge of the sealing member 50 and the inner circumferential surface of the pipe portion 44 defining the injection port 42.

For example, the sealing member 50 and the lid 40 may be laser welded. Laser welding may be defined as a process of melting and bonding metals using a laser beam having high energy density. Referring to FIG. 12, the sealing member 50 and the inner circumferential surface of the pipe portion 44 may be welded by irradiating the laser L.

The final sealing force may be greater than the temporary sealing force. For example, the final sealing force that can be secured by welding may be about 10⁻⁷ atm·cc/s or less based on He leak. That is, high airtightness may be secured.

According to the above embodiment of the present disclosure, since thermal bonding is performed after securing the temporary sealing force, it is possible to prevent the phenomenon such as the formation of gas channels or the occurrence of cracks during the thermal bonding process, thereby preventing defects of the welded portion 52.

Additionally, according to the above embodiment of the present disclosure, since welding is performed after securing the temporary sealing force, it is possible to prevent the phenomenon of electrolyte vapor leaking to the outside and being ignited during the welding process.

Additionally, according to the above embodiment of the present disclosure, one sealing member 50 component may be used to form a sealing portion 51 for the injection port 42 and also form a welded portion 52 with the inner circumferential surface of the injection port 42. Accordingly, the number of parts may be reduced and the assembly man-hours may be reduced.

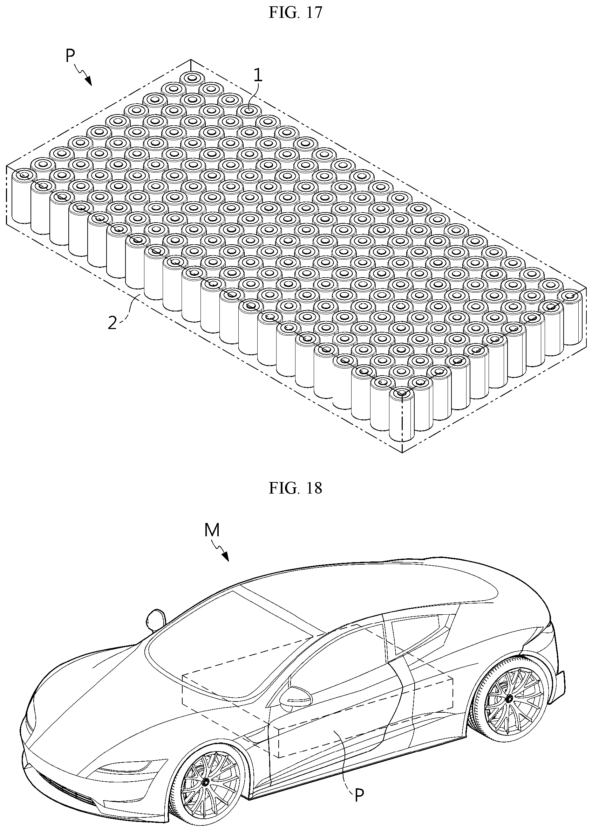

FIG. 17 is a view for describing a battery pack according to an embodiment of the present disclosure. FIG. 18 is a view for describing a vehicle including the battery pack of FIG. 17.

Referring to FIG. 17, a battery pack P according to the present disclosure may include at least one battery cell 1 according to the present disclosure described above. Additionally, the battery pack P according to the present disclosure may include a pack housing 2 capable of accommodating the at least one battery cell 1. The battery pack P may be configured using a battery module, which is an intermediate form of assembly, or may be configured directly without a battery module as illustrated. Since the battery cell 1 itself has a large volume, there may be no particular difficulty in implementing the battery pack P even without using an intermediate structure called a battery module.

In addition, the battery pack P may further include various components in addition to the battery cell 1, for example, components of the battery pack P known at the time of filing of the present disclosure, such as a BMS, a pack case, a relay, a current sensor, and the like.

A plurality of battery cells 1 may be included in the battery pack P. The battery cells 1 may be arranged in a predetermined number of rows, and may be arranged so that both the first electrode terminal 13 and the second electrode terminal 15 are placed on the upper side in each battery cell 1. Therefore, when electrically connecting the plurality of battery cells 1, both the positive electrode and the negative electrode may be connected in one direction, thereby simplifying the electrical connection structure. Accordingly, energy density may be improved by increasing the number of battery cells 1 that can be mounted in the same space, and electrical wiring work may be facilitated. Therefore, the space efficiency is excellent, and the electrical wiring efficiency is high, which has a significant improvement effect in the assembly process of an electric vehicle, and the assembly and maintenance of the battery pack P. And, each battery cell 1 may have a higher energy density than a conventional cell, as described above. The battery pack P with the increased energy density in this way may store the same energy while reducing the volume and weight thereof.

Therefore, if the battery pack P to which these battery cells 1 are applied is mounted on a vehicle such as a vehicle M using electricity as an energy source as illustrated in FIG. 17, the mileage of the vehicle per unit of energy may be further expanded.

Referring to FIG. 18, a vehicle M according to the present disclosure may include at least one battery pack P according to the present disclosure.

The battery cell 1 according to the present disclosure may be applied to vehicles such as electric vehicles or hybrid vehicles. That is, the vehicle M according to the present disclosure may include the battery cell 1 according to the present disclosure or the battery pack P according to the present disclosure. Additionally, the vehicle M according to the present disclosure may further include various other components included in the vehicle, in addition to the battery cell 1 or the battery pack P. For example, the vehicle M according to the present disclosure may further include a vehicle body, a motor, a control device such as an electronic control unit (ECU), and the like, in addition to the battery cell 1 according to the present disclosure. The vehicle M includes a four-wheeled vehicle and a two-wheeled vehicle. The vehicle M may operate by receiving power from the battery pack P according to an embodiment of the present disclosure.

The present disclosure has been described hereinabove with reference to a limited number of embodiments and drawings, but the present disclosure is not limited thereto and it is obvious that a variety of modifications and variations may be made thereto by those having ordinary skill in the art within the technical aspect of the present disclosure and the scope of the appended claims and their equivalents.

## Claims

1. A battery cell comprising:
an electrode assembly in which a first electrode, a second electrode, and a separator interposed therebetween are wound around a winding axis;
a can configured to accommodate the electrode assembly through an open end formed on one side;
a lid covering the open end and having an injection port; and
a sealing member configured to seal the injection port,
wherein the sealing member has a sealing portion pressed into the injection port and in close contact with an inner circumferential surface of the injection port; and a welded portion mutually welded to the inner circumferential surface of the injection port.

2. The battery cell according to claim 1,
wherein the sealing portion and the welded portion are spaced apart from each other in the winding axis direction.

3. The battery cell according to claim 1,
wherein the lid comprises a plate portion provided with a hole; and a pipe portion that extends inward from an inner circumference of the plate portion defining the hole in the winding axis direction and forms the injection port.

4. The battery cell according to claim 3,
wherein the pipe portion has a tapered section whose inner diameter decreases toward the inner side in the winding axis direction.

5. The battery cell according to claim 4,
wherein the maximum outer diameter of the sealing member is larger than the minimum inner diameter of the tapered section of the pipe portion.

6. The battery cell according to claim 4,
wherein the maximum outer diameter of the sealing member is larger than the minimum inner diameter of the tapered section by 0.05 mm or more and 0.40 mm or less.

7. The battery cell according to claim 1,
wherein the sealing portion of the sealing member is positioned on the inner side in the winding axis direction relative to the center line of the sealing member.

8. The battery cell according to claim 4,
wherein when the sealing member is pressed into the injection port, the inner diameter of the pipe portion is expanded radially outward in a predetermined section of the tapered section that contacts the sealing portion.

9. The battery cell according to claim 1,
wherein the welded portion is disposed on the outer side in the winding axis direction relative to the sealing portion.

10. The battery cell according to claim 1,
wherein the sealing member has a ball shape.

11. The battery cell according to claim 1,
wherein the can and the lid are thermally bonded.

12. A method for manufacturing a battery cell according to any one of claims 1 to 11, the method comprising:
a step of covering the open end with the lid while accommodating the electrode assembly in the can;
a step of thermally bonding the edge of the lid to the can;
a step of injecting an electrolyte into the can through the injection port of the lid bonded to the can;
a step of pressing the sealing member into the injection port after injecting the electrolyte to allow the injection port and the sealing member to be in close contact with each other; and
a step of welding the sealing member and the inner circumferential surface of the injection port.

13. The method for manufacturing a battery cell according to claim 12,
wherein the press-in load of the sealing member is 1 ton or less.

14. The method for manufacturing a battery cell according to claim 12,
wherein the sealing force of the injection port and the sealing member is in the range of 10⁻⁵ to 10⁻³ atm·cc/s based on He leak.

15. A battery pack comprising a battery cell according to any one of claims 1 to 11.

16. A vehicle equipped with a battery pack according to claim 15.
